# EUROPÄISCHE PATENTSCHRIFT

(11) **EP 3 907 111 B1**
(45) Veröffentlichungstag und Bekanntmachung des Hinweises auf die Patenterteilung: **23.09.2026**
(21) Anmeldenummer: 21171594.1
(22) Anmeldetag: 30.04.2021
(51) Int. Cl.: B60R 19/56

(54) **UNTERFAHRSCHUTZ FÜR EIN NUTZFAHRZEUG**
UNDERRIDE PROTECTION FOR A COMMERCIAL VEHICLE
DISPOSITIF DE PROTECTION ARRIÈRE POUR UN VÉHICULE UTILITAIRE

(30) Priorität: 04.05.2020 DE 202020102481 U
(43) Veröffentlichungstag der Anmeldung: 10.11.2021
(73) Patentinhaber: WAP Fahrzeugtechnik GmbH, 33178 Borchen (DE)
(72) Erfinder: MORFELD, Alfons, 33129 Delbrück (DE)
(74) Vertreter: Kleine, Hubertus

(56) Entgegenhaltungen:
- DE-U1- 202018 105 339
- DE-U1- 202018 105 339
- US-A- 3 709 542
- US-B2- 10 632 947

## Beschreibung

Die Erfindung betrifft einen Unterfahrschutz für ein Nutzfahrzeug, mit mindestens einem fahrzeugseitig festlegbaren Anschlusselement, einem daran schwenkbar angeschlossenen Tragholm, an dem endseitig ein Prallbalken befestigt ist, sowie einer Stützlasche, die einerseits an dem Anschlusselement angelenkt ist und andererseits zwangsgeführt am Tragholm in Schwenkrichtung relativ beweglich gehalten ist.

Ein derartiger Unterfahrschutz kommt front- oder heckseitig zum Einsatz, letzteres sowohl bei Lastkraftwagen wie auch bei von einem Zugfahrzeug gezogenen Anhängern.

Der Unterfahrschutz soll verhindern, dass bei einem Auffahrunfall das auffahrende Fahrzeug, insbesondere ein PKW, unter die Ladefläche des Nutzfahrzeuges geschoben wird, vor allem um Personenschäden zu vermeiden.

In der US 10 632 947 B2 ist ein von der Gattung abweichender Unterfahrschutz für ein Nutzfahrzeug offenbart, bei dem ein einen Prallbock tragender Tragholm ebenso an einem fahrzeugseitigen Fahrgestell angelenkt ist wie eine Stützlasche. Diese ist zwangsgeführt am Tragholm gehalten, wobei hierzu die Stützlasche ein Langloch aufweist, in dem ein Gleitstift des Tragholms verschieblich geführt ist, der sich an einem im Langloch positionierten stoßdämpfenden Pufferelement abstützt.

Bei einem gattungsgemäßen Unterfahrschutz, wie er beispielsweise aus der DE 20 2018 105 339 U1 bekannt ist, ist der Prallbalken in Funktion, d.h. während des Fahrbetriebs, in eine abgesenkte Funktionsstellung verschwenkt. Insbesondere zum einfacheren Rangieren des Fahrzeugs wird der Prallbalken aus seiner abgesenkten Funktionsstellung in eine aufgeschwenkte Nichtfunktionsstellung bewegt und in dieser Position verriegelt gehalten.

Prinzipiell hat sich die aus der DE 20 2018 105 339 U1 bekannte Konstruktion bewährt. Um die bei einem Unfall auf den Prallbalken und damit auch auf die übrigen beteiligten Bauteile einwirkenden Aufprallkräfte aufnehmen zu können, sind zwei parallel und abständig zueinander angeordnete, hinsichtlich ihrer Raumform identische Stützlaschen vorgesehen, die beidseitig zwangsgeführt am Tragholm in Schwenkrichtung relativ beweglich angeordnet sind und andererseits mit dem plattenförmigen Anschlusselement gelenkig verbunden.

Zusätzlich ist zur Verstärkung ein sogenannter Verbindungsarm vorgesehen, der sowohl am Tragholm wie auch mittelbar am Anschlusselement angelenkt ist.

Wie erwähnt, hat sich dieser bekannte Unterfahrschutz funktional bewährt. Allerdings ist zum einen der konstruktive Aufbau sowie in der Folge die Fertigung aufgrund der Vielzahl von Einzelteilen relativ aufwändig und teuer. Zum anderen gehen Forderungen dahin, den Unterfahrschutz leichter zu gestalten, um so einer stets geforderten Gewichtsoptimierung zu entsprechen.

Der Erfindung liegt die Aufgabe zugrunde, einen Unterfahrschutz der gattungsgemäßen Art so weiterzuentwickeln, dass er bei gleichbleibender Funktionssicherheit einfacher und kostengünstiger herstellbar und gewichtsoptimiert ist.

Diese Aufgabe wird durch einen Unterfahrschutz mit den Merkmalen des Anspruchs 1 gelöst.

Die gemäß der Erfindung vorgeschlagene Ausbildung kann mit deutlich weniger Bauteilen realisiert werden als dies bislang möglich war. So sind jedem Anschlusselement und daran schwenkbar angeschlossenen Tragholmen lediglich eine Stützlasche zugeordnet, die, gemäß der Erfindung, mit einem Anschlag versehen ist, an dem der Tragholm in abgesenkter Funktionsstellung abstützt, wobei dieser Anschlag ein Widerlager bildet, über das unfallbedingt auf den Tragholm einwirkende Kräfte auf das Anschlusselement übertragen werden.

Nach einem weiteren Gedanken der Erfindung weist der Anschlag eine planebene Anschlagfläche auf, an der der Tragholm anliegt.

Zur Verstärkung des Tragholms im Anlagebereich kann ein Verstärkungselement vorgesehen sein, das an dem Tragholm befestigt ist und im Querschnitt U- oder L-förmig ausgebildet ist, wobei der Tragholm selbst aus einem Rohr- oder Winkelprofil besteht.

In an sich bekannter Weise sind zwei Tragholme vorgesehen, die parallel und abständig zueinander angeordnet sind und gemeinsam den einen Prallbalken tragen, der als Vierkant- oder Rundprofil ausgebildet sein kann und mit geeigneten Formschlussmitteln an den Tragholmen befestigt ist. Die Anschlusselemente sind auf den einander zugewandten Seiten der Tragholme positioniert, ebenso wie die Stützlaschen, von denen jeweils eine an einem Anschlusselement befestigt ist. Die Anschlusselemente sind, wie aus dem Stand der Technik bekannt, fahrzeugseitig befestigt.

Die Zwangsführung der Stützlasche am Tragholm erfolgt mittels einer Kulissenbahn, in die ein Kulissenzapfen eingreift, wobei der Kulissenzapfen am Tragholm und die Kulissenbahn an der Stützlasche vorgesehen sind oder der Kulissenzapfen an der Stützlasche und die Kulissenbahn am Tragholm. Dabei ist der Kulissenzapfen sowohl in Funktions- wie auch in Nichtfunktionsstellung des Tragholms zwischen den Anlenkstellen der Stützlasche und des Tragholms an dem Anschlussflansch positioniert.

In abgesenkter Endstellung des Tragholms, in der dieser am Anschlag anliegt, nimmt auch der Kulissenzapfen eine Endposition in der Kulissenbahn ein, d.h., er liegt an einer gekrümmten Wandung der als Langloch ausgebildeten Kulissenbahn an.

Um den Tragholm in einer aufgeschwenkten Position zu halten, ist eine Arretiereinrichtung vorgesehen, mit der eine formschlüssige Arretierung des Tragholms am Anschlusselement erfolgt, wobei die Arretiereinrichtung manuell zu betätigen ist. Für eine Arretierung in unterschiedlichen Schwenkstellungen des Tragholms kann das Anschlusselement entsprechend modifiziert sein, beispielsweise durch ein Lochmuster, durch das ein Arretierstift ragt, der in Korrespondenz mit dem Tragholm steht.

Durch den nunmehr gegenüber dem Stand der Technik deutlich verringerten Materialeinsatz des neuen Unterfahrschutzes ist auch dessen Gesamtgewicht verringert, was den steten Forderungen nach einer gewichtsoptimierten Ausführung in optimaler Weise entgegenkommt. Hierzu trägt auch bei, dass die beteiligten Bauteile im Wesentlichen als Blechformteile ausgebildet sind.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: einen erfindungsgemäßen Unterfahrschutz in einer perspektivischen Ansicht
- Fig. 2: den Unterfahrschutz in einer Seitenansicht, gesehen in Richtung des Pfeiles II in Fig. 1
- Fig. 3 und 4: den Unterfahrschutz gemäß Fig. 2 in einer vergrößerten Seitenansicht in unterschiedlichen Stellungen.

In den Figuren ist ein Unterfahrschutz für ein Nutzfahrzeug abgebildet, mit zwei abständig zueinander angeordneten, an einem nicht gezeigten Nutzfahrzeug festlegbaren plattenförmigen Anschlusselementen 1.

An den einander abgewandten Seiten der Anschlusselemente 1 ist jeweils über ein Drehlager 7 ein Tragholm 4 schwenkbar angeschlossen sowie mittels einer Drehachse 8 eine Stützlasche 2, die gleichfalls plattenförmig ausgebildet ist. An den den Anschlusselementen 1 abgewandten Enden der Tragholme 4 ist ein Prallbalken 5 angeschlossen, der im Beispiel als Vierkantrohr ausgebildet ist, jedoch auch aus anders gestalteten Profilen gebildet sein kann.

Gemäß der Erfindung weist die Stützlasche 2 einen Anschlag 3 auf, an dem der Tragholm 4 in einer abgesenkten Funktionsstellung anliegt und zwar an einer Anlagefläche 12. Dieser Anschlag 3 ist als separates Bauteil form- oder stoffschlüssig mit der Stützlasche 2 verbunden sein, oder durch Umformen, d.h. Abwinkeln der aus Blech bestehenden Stützlasche 2.

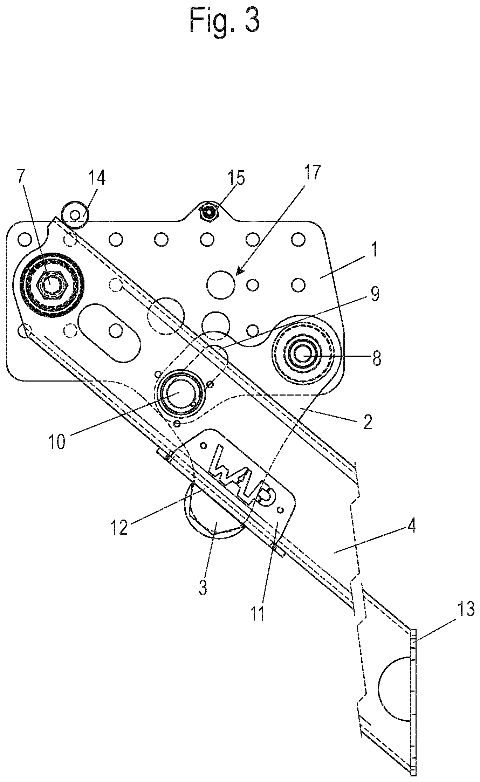

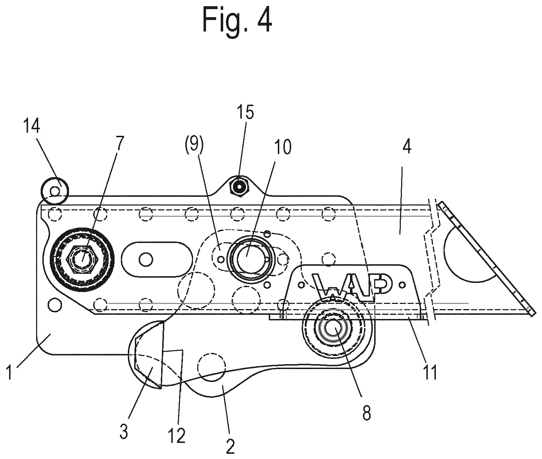

Während die Figur 3 den Tragholm 4 in einer abgeschwenkten Funktionsstellung wiedergibt, zeigt die Figur 4 eine Nichtfunktionsstellung, in der der Tragholm 4 aufgeschwenkt ist und mittels einer Verriegelungseinrichtung 6 arretiert an dem Anschlusselement 1 gehalten ist.

Die Stützlasche 2 ist zwangsgeführt am Tragholm 4 in Schwenkrichtung relativ beweglich gehalten. Hierzu weist die Stützlasche 2 eine Kulissenbahn 9 auf in Form eines Langloches, in dem ein Kulissenzapfen 10 des Tragholms 4 geführt ist.

Wie besonders deutlich in der Figur 3 zu erkennen ist, liegt der Kulissenzapfen 10 in abgesenkter Funktionsstellung des Tragholms 4 an der gekrümmten Innenwand der Kulissenbahn 9 an.

Zur Verstärkung des Tragholms 4, insbesondere um ein sich bei einem Aufprall auf den Prallbalken 5 sich ergebendes höheres Biegemoment im Bereich der Anlage des Tragholms 4 am Anschlag 3 aufnehmen zu können, ist in diesem Bereich eine Verstärkung in Form eines Verstärkungselementes 11 am Tragholm 4 befestigt, der dann am Anschlag 3 anliegt.

Zur Befestigung des Prallbalkens 5 ist der Tragholm 4 am zugeordneten Ende mit einer Befestigungsplatte 13 versehen, zur Aufnahme von Befestigungsmitteln, mit denen der Prallbalken 5 formschlüssig am Tragholm 4 gehalten ist.

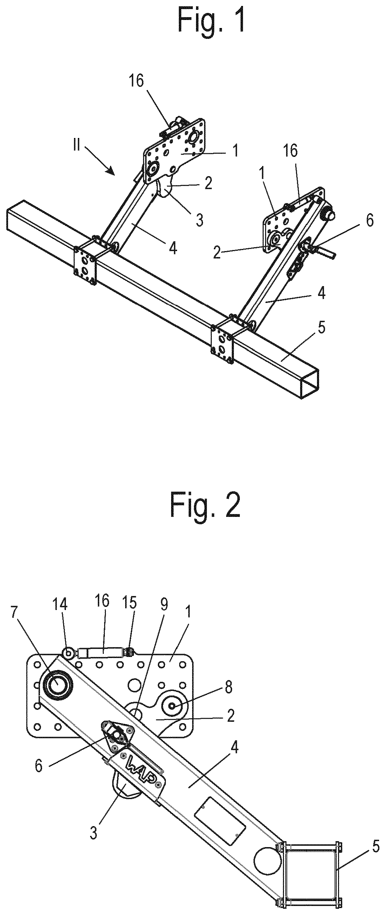

Die Verriegelungseinrichtung 6, die, wie insbesondere die Figur 1 zeigt, am Tragholm 4 gehalten ist, ist so ausgebildet, dass ein nicht gezeigter Verriegelungsstift durch den Tragholm 4 geführt in ein Loch des zugeordneten Anschlusselementes 1 eingreift.

Um die Tragholme 4 und damit den Prallbalken 5 in verschiedenen Schwenkstellungen zu arretieren, weisen die Anschlusselemente 1 jeweils ein Lochmuster 17 auf, in dessen Löcher der Arretierstift bei Bedarf eingesteckt wird.

Um das manuelle Verschwenken des Prallbalkens 5 bzw. der Tragholme 4 von einer abgesenkten Gebrauchs- in eine aufgeschwenkte Nichtgebrauchsstellung zu erleichtern, ist ein Kraftspeicher vorgesehen, beispielsweise eine Gasdruckfeder 16 (Figur 2), die einerseits an einem Halter 15 des Anschlusselementes 1 und andererseits an einer Befestigung 14 des Tragholms 4 angreift.

### Bezugszeichenliste

- 1: Anschlusselement
- 2: Stützlasche
- 3: Anschlag
- 4: Tragholm
- 5: Prallbalken
- 6: Arretiereinrichtung
- 7: Drehlager
- 8: Drehachse
- 9: Kulissenbahn
- 10: Kulissenzapfen
- 11: Verstärkungselement
- 12: Anlagefläche
- 13: Befestigungsplatte
- 14: Befestigung
- 15: Halter
- 16: Gasdruckfeder
- 17: Lochmuster

## Patentansprüche

1. Unterfahrschutz für ein Nutzfahrzeug, mit mindestens einem fahrzeugseitig festlegbaren Anschlusselement (1), einem daran schwenkbar angeschlossenen Tragholm (4), an dem endseitig ein Prallbalken (5) befestigt ist, sowie einer Stützlasche (2), die einerseits am Anschlusselement (1) angelenkt ist und andererseits zwangsgeführt am Tragholm (4) in Schwenkrichtung relativ dazu beweglich gehalten ist, **dadurch gekennzeichnet, dass** die aus Blech bestehende Stützlasche (2) einen ein Widerlager bildenden Anschlag (3) aufweist, an dem der Tragholm (4) in abgeschwenkter Funktionsstellung anliegt, und der durch Abwinkeln der Stützlasche (2) gebildet ist oder als separates Bauteil form- oder stoffschlüssig mit der Stützlasche (2) verbunden ist.

2. Unterfahrschutz nach Anspruch 1, **dadurch gekennzeichnet, dass** der Anschlag (3) eine Anlagefläche (12) aufweist, an der der Tragholm (4) in Funktionsstellung anliegt.

3. Unterfahrschutz nach Anspruch 1 oder 2, **dadurch gekennzeichnet, dass** der Tragholm (4) im Überdeckungsbereich mit dem Anschlag (3) ein Verstärkungselement (11) aufweist.

4. Unterfahrschutz nach einem der vorhergehenden Ansprüche, **dadurch gekennzeichnet, dass** bei Anordnung von zwei Anschlusselementen (1) mit jeweils einem angeschlossenen Tragholm (4) und einer Stützlasche (2) die Tragholme (4) und die Stützlaschen (2) an den einander abgewandten Seiten der Anschlusselemente (1) angeordnet sind.

5. Unterfahrschutz nach einem der vorhergehenden Ansprüche, **dadurch gekennzeichnet, dass** die Stützlasche (2) zwischen dem Anschlusselement (1) und dem Tragholm (4) angeordnet ist.

6. Unterfahrschutz nach einem der vorhergehenden Ansprüche, **dadurch gekennzeichnet, dass** der Tragholm (4) aus einem Rohr- oder Winkelprofil besteht.

7. Unterfahrschutz nach einem der vorhergehenden Ansprüche, **dadurch gekennzeichnet, dass** die Stützlasche (2) oder der Tragholm (4) eine Kulissenbahn (9) aufweisen, in der ein Kulissenzapfen (10) des Tragholms (4) oder der Stützlasche (2) geführt ist.

8. Unterfahrschutz nach einem der vorhergehenden Ansprüche, **dadurch gekennzeichnet, dass** der Tragholm (4) in aufgeschwenkter Nichtfunktionsstellung an dem Anschlusselement (1) arretiert gehalten ist.

9. Unterfahrschutz nach einem der vorhergehenden Ansprüche, **dadurch gekennzeichnet, dass** das plattenförmige Anschlusselement (1) ein Lochmuster (17) mit Löchern, zur Aufnahme des Arretierelementes in unterschiedlichen Schwenkstellungen des Tragholms (4) aufweist.

10. Unterfahrschutz nach einem der vorhergehenden Ansprüche, **dadurch gekennzeichnet, dass** ein Kraftspeicher, insbesondere eine Schrauben- oder Gasdruckfeder einerseits am Anschlusselement (1) und andererseits am Tragholm (4) angeschlossen ist.

## Claims

1. Underride protection device for a commercial vehicle, having at least one connection element (1) that can be secured on the vehicle side, a load-bearing beam (4) connected thereto so it is pivotable, on which an impact bar (5) is fastened at the end, and a support tab (2), which is linked on the connection element (1) on one side and is held on the load-bearing beam (4) on the other side positively-guided manner so it is movable relative thereto in the pivot direction, **characterized in that** the support tab (2), which consists of sheet metal, has a stop (3) forming a buttress, against which the load-bearing beam (4) presses in the pivoted-down functional position, and which stop is formed by angling the support tab (2) or is connected in a formfitting or materially-bonded manner to the support tab (2) as a separate component.

2. Underride protection device as claimed in claim 1, **characterized in that** the stop (3) has a contact surface (12), against which the load-bearing beam (4) presses in the functional position.

3. Underride protection device as claimed in claim 1 or 2, **characterized in that** the load-bearing beam (4) has a reinforcing element (11) in the overlap area with the stop (3).

4. Underride protection device as claimed in any one of the preceding claims, **characterized in that,** if two connection elements (1) are arranged, each having a connected load-bearing beam (4) and a support tab (2), the load-bearing beams (4) and the support tabs (2) are arranged on the sides of the connection element (1) facing away from one another.

5. Underride protection device as claimed in any one of the preceding claims, **characterized in that** the support tab (2) is arranged between the connection element (1) and the load-bearing beam (4).

6. Underride protection device as claimed in any one of the preceding claims, **characterized in that** the load-bearing beam (4) consists of a tubular or angled profile.

7. Underride protection device as claimed in any one of the preceding claims, **characterized in that** the support tab (2) or the load-bearing beam (4) has a link track (9), in which a link pin (10) of the load-bearing beam (4) or the support tab (2) is guided.

8. Underride protection device as claimed in any one of the preceding claims, **characterized in that** the load-bearing beam (4) is held locked on the connection element (1) in the pivoted-up nonfunctional position.

9. Underride protection device as claimed in any one of the preceding claims, **characterized in that** the plate -shaped connection element (1) has a hole pattern (17) having holes for receiving the locking element in different pivot positions of the load-bearing beam (4).

10. Underride protection device as claimed in any one of the preceding claims, **characterized in that** a force accumulator, in particular a coil spring or gas pressure spring, is connected on one side to the connection element (1) and on the other side to the load-bearing beam (4).

## Revendications

1. Protection anti-encastrement pour un véhicule utilitaire avec au moins un élément de raccordement (1) pouvant être fixé du côté du véhicule, une membrure de support (4) raccordée à celui-ci de façon pivotante, à l'extrémité de laquelle une barre pare-chocs (5) est fixée, et avec une patte d'appui (2) qui est articulée d'un côté sur l'élément de raccordement (1) et guidée en force de l'autre côté sur la membrure de support (4) et retenue avec possibilité de mouvement pivotant par rapport à celle-ci, **caractérisée en ce que** la patte d'appui (2) faite de tôle présente une butée (3) qui forme un contre-appui, sur laquelle la membrure de support (4) repose dans la position de fonctionnement basculée et qui est formée par pliage de la patte d'appui (2) ou formée d'une pièce séparée assemblée par engagement positif ou solidarité de matière avec la patte d'appui (2).

2. Protection anti-encastrement selon la revendication 1, **caractérisée en ce que** la butée (3) comporte une surface d'appui (12) sur laquelle la membrure de support (4) repose dans la position de fonctionnement.

3. Protection anti-encastrement selon la revendication 1 ou 2, **caractérisée en ce que** la membrure de support (4) comporte un élément de renfort (11) dans la zone de chevauchement avec la butée (3).

4. Protection anti-encastrement selon l'une des revendications précédentes, **caractérisée en ce que**, lorsque sont prévus deux éléments de raccordement (1) avec chacun une membrure de support (4) raccordée et une patte d'appui (2), les membrures de support (4) et les pattes d'appui (2) sont disposées sur les côtés opposés l'un à l'autre des éléments de raccordement (1).

5. Protection anti-encastrement selon l'une des revendications précédentes, **caractérisée en ce que** la patte d'appui (2) est disposée entre l'élément de raccordement (1) et la membrure de support (4).

6. Protection anti-encastrement selon l'une des revendications précédentes, **caractérisée en ce que** la membrure de support (4) se compose d'un profilé tubulaire ou angulaire.

7. Protection anti-encastrement selon l'une des revendications précédentes, **caractérisée en ce que** la patte d'appui (2) ou la membrure de support (4) comporte une piste de glissière (9) dans laquelle est guidé un goujon coulissant (10) de la membrure de support (4) ou de la patte d'appui (2).

8. Protection anti-encastrement selon l'une des revendications précédentes, **caractérisée en ce que** la membrure de support (4) est retenue bloquée sur l'élément de raccordement (1) dans une position inactive relevée.

9. Protection anti-encastrement selon l'une des revendications précédentes, **caractérisée en ce que** l'élément de raccordement (1) en forme de plaque présente un motif de perforations (17) avec des trous servant à recevoir l'élément d'arrêt dans différentes positions de basculement de la membrure de support (4).

10. Protection anti-encastrement selon l'une des revendications précédentes, **caractérisée en ce qu'**un accumulateur de force, en particulier un ressort à boudin ou un ressort à gaz, est raccordé d'un côté à l'élément de raccordement (1) et de l'autre côté à la membrure de support (4).
